# EUROPEAN PATENT APPLICATION

(11) **EP 4 717 731 A1**
(43) Date of publication of application: **01.04.2026**
(21) Application number: 25204524.0
(22) Date of filing: 25.09.2025
(51) Int. Cl.: C08L 9/00

(54) **RUBBER COMPOSITION, ARTICLES THEREOF AND METHOD OF MANUFACTURING**

(30) Priority: 30.09.2024 US 202418901445
(71) Applicant: The Goodyear Tire & Rubber Company, Akron, OH 44316 (US)
(72) Inventor: JOHNSON, Dawn Michelle, Uniontown, 44685 (US); DILLON, Sean Michael, Wadsworth (US)
(74) Representative: Kutsch, Bernd

(57) **Abstract**

A composition comprising an elastomer, 1.0 phr to 4.0 phr of a dispersing agent and 0.5 phr to 4.0 phr of a vegetable oil is disclosed. Also, a vulcanized rubber composition comprising said composition and an article, a tire or a tire component comprising such a vulcanized rubber composition is disclosed. Furthermore, a method for mixing rubber is disclosed. The method comprises a nonproductive stage and a productive stage. The nonproductive stage comprises: combining together an elastomer, 1.0 phr to 4.0 phr of a dispersing agent; and 0.5 phr to 4.0 phr of a vegetable oil, thereby forming an initial mixture; and mixing the initial mixture at a temperature of 120 °C to 175 °C, thereby forming a nonproductive mixture. The productive stage comprises: combining together the nonproductive mixture with a curing agent, thereby forming an intermediate mixture; and mixing the intermediate mixture at a temperature of 95 °C to 115 °C, thereby forming a productive mixture.

## Description

### BACKGROUND

The demand for improved tire performance has resulted in the development and evaluation of new materials that have desirable properties. Improving tire properties such as rolling resistance while maintaining the balance in tradeoffs can be challenging. For example, additives that improve hysteresis of a tire can also reduce stiffness and worsen processability (e.g., tack characteristics such as viscosity) of the uncured rubber composition. There is a need for rubber formulations that have a balance between properties such as processability and low tire rolling resistance. These needs and other needs are satisfied by the present invention.

### SUMMARY OF THE INVENTION

The invention relates to a composition in accordance with claim 1, to a vulcanized rubber composition in accordance with claim 9, to an article, tire or tire component in accordance with claim 12, and to a method in accordance with claim 13.

Dependent claims refer to preferred embodiments of the invention.

In accordance with the purpose(s) of the invention, as embodied and broadly described herein, the invention, in one aspect, relates to a composition, comprising: an elastomer; 1.0 phr to 4.0 phr of a dispersing agent; and 0.5 phr to 4.0 phr of a vegetable oil. Also disclosed herein are vulcanized rubber compositions and articles, such as tires, comprising said vulcanized rubber compositions.

Also disclosed herein is a method for mixing rubber, comprising a nonproductive stage and a productive stage. The nonproductive stage comprises combining together an elastomer, 1.0 phr to 4.0 phr of a dispersing agent, and 0.5 phr to 4.0 phr of a vegetable oil, thereby forming an initial mixture; and mixing the initial mixture at a temperature of 120 °C to 175 °C, thereby forming a nonproductive mixture. The productive stage comprises combining together the nonproductive mixture with a curing agent, thereby forming an intermediate mixture; and mixing the intermediate mixture at a temperature of 95 °C to 115 °C, thereby forming a productive mixture.

Other systems, methods, features, and advantages of the present invention will be or become apparent to one with skill in the art upon examination of the following detailed description. All optional and preferred features and modifications of the described aspects are usable in all aspects of the invention taught herein. Furthermore, the individual features of the dependent claims, as well as all optional and preferred features and modifications of the described aspects are combinable and interchangeable with one another.

### DETAILED DESCRIPTION OF PREFERRED EMBODIMENTS OF THE INVENTION

Any recited method can be carried out in the order of events recited or in any other order that is logically possible. That is, unless otherwise expressly stated, it is in no way intended that any method or aspect set forth herein be construed as requiring that its steps be performed in a specific order. Accordingly, where a method claim does not specifically state in the claims or descriptions that the steps are to be limited to a specific order, it is no way intended that an order be inferred, in any respect. This holds for any possible non-express basis for interpretation, including matters of logic with respect to arrangement of steps or operational flow, plain meaning derived from grammatical organization or punctuation, or the number or type of aspects described in the specification.

Prior to describing the various aspects of the present invention, the following definitions are provided and should be used unless otherwise indicated. Additional terms may be defined elsewhere in the present invention.

### Definitions

As used herein, "comprising" is to be interpreted as specifying the presence of the stated features, integers, steps, or components as referred to, but does not preclude the presence or addition of one or more features, integers, steps, or components, or groups thereof. Moreover, each of the terms "by", "comprising," "comprises", "comprised of," "including," "includes," "included," "involving," "involves," "involved," and "such as" are used in their open, non-limiting sense and may be used interchangeably. Further, the term "comprising" is intended to include examples and aspects encompassed by the terms "consisting essentially of" and "consisting of." Similarly, the term "consisting essentially of" is intended to include examples encompassed by the term "consisting of.

As used herein, nomenclature for compounds, including organic compounds, can be given using common names, IUPAC, IUBMB, or CAS recommendations for nomenclature. When one or more stereochemical features are present, Cahn-Ingold-Prelog rules for stereochemistry can be employed to designate stereochemical priority, E/Z specification, and the like. One of skill in the art can readily ascertain the structure of a compound if given a name, either by systemic reduction of the compound structure using naming conventions, or by commercially available software, such as CHEMDRAW^{™} (Cambridgesoft Corporation, U.S.A.).

As used in the specification and the appended claims, the singular forms "a," "an" and "the" include plural referents unless the context clearly dictates otherwise. Thus, for example, reference to "an elastomer," "an oil," or "a dispersing agent," includes, but is not limited to, two or more such elastomers, oils, or dispersing agents, and the like. Reference to "a" chemical compound refers to one or more molecules of the chemical compound rather than being limited to a single molecule of the chemical compound. Furthermore, the one or more molecules may or may not be identical, so long as they fall under the category of the chemical compound. Thus, for example, "a" chemical compound is interpreted to include one or more molecules of the chemical compound, where the molecules may or may not be identical (e.g., different isotopic ratios, enantiomers, and the like).

As used herein, the terms "preferably", "optional" or "optionally" means that the subsequently described event or circumstance can or cannot occur, and that the description includes instances where said event or circumstance occurs and instances where it does not.

The terms "rubber" and "elastomer" may be used herein interchangeably, unless indicated otherwise.

As used herein, the term "phr" refers to parts by weight of a respective material per 100 parts by weight of rubber or elastomer. In general, using this convention, an elastomer composition is comprised of 100 parts by weight of rubber/elastomer. The claimed composition may comprise other rubbers/elastomers than explicitly mentioned in the claims, provided that the phr value of the claimed rubbers/elastomers is in accordance with claimed phr ranges and the amount of all rubbers/elastomers in the composition results in total in 100 parts of rubber/elastomer.

As used herein, the term "uncured composition" refers to a composition including at least one natural or synthetic rubber component and, optionally, one or more fillers, processing aids, or additional compounds, that has not been vulcanized. Uncured rubber is sensitive to changes in temperature and has a tendency to undergo "cold flow" (slow movement or deformation under stress) over time. In one aspect, the uncured rubber composition is a masterbatch.

As used herein, the term "vulcanized rubber composition" refers to a rubber composition obtained by taking an uncured composition as described herein and curing or vulcanizing it, often accomplished using sulfur compounds and/or other curing additives and in the presence of heat. Vulcanized or cured rubber does not undergo cold flow and is less sensitive to changes in temperature relative to uncured rubber. In one aspect, rubber compositions can be cured in molds in order to form finished articles such as tires.

As used herein, the term "repeat unit" as referenced in the elastomers described herein are derived from monomers used to produce the partially saturated elastomers. For example, polybutadiene has the repeat unit as provided below.

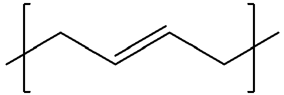

In certain aspects, when the elastomer is the polymerization product of two different monomers (e.g., A and B), the repeat unit can be represented by -A-B-.

As used herein, a "residue" of a chemical species refers to the moiety that is the resulting product of the chemical species in a particular reaction scheme or subsequent formulation or chemical product, regardless of whether the moiety is actually obtained from the chemical species. Thus, an isoprene residue in an elastomer refers to one or more - CH₂CH=C(CH₃)CH₂- units in the elastomer, regardless of whether isoprene was used to prepare the elastomer. Similarly, a butadiene residue in an elastomer refers to one or more - CH₂CH=CHCH₂- moieties in the elastomer, regardless of whether the residue is obtained by reacting sebacic acid or an ester thereof to obtain the polyester.

Unless otherwise specified, temperatures referred to herein are based on atmospheric pressure (i.e. one atmosphere).

### Rubber compositions

In one aspect, the invention relates to compositions, such as uncured or cured rubber compositions, comprising an elastomer, a dispersing agent, and a vegetable oil. The compositions disclosed herein exhibit relatively low hysteresis while maintaining stiffness and processability. In one aspect, in the rubber compositions disclosed herein, the vegetable oil is used in place of other processing oils, such as mineral oils. Furthermore, processing of the rubber compositions can require no more than two mixing passes or stages. The present invention also relates to methods of making the disclosed compositions and to articles, such as tires and/or components of tires, comprising the compositions.

More specifically, in one aspect, the present invention relates to a composition, comprising: an elastomer; 1.0 phr to 4.0 phr of a dispersing agent; and 0.5 phr to 4.0 phr of a vegetable oil. In a further aspect, the composition does not comprise a mineral oil. In another aspect, the composition can comprise from 1.0 phr to 4.0 phr, 2.0 phr to 4.0 phr, 1.0 phr to 3.0 phr, or 2.0 phr to 3.0 phr of a dispersing agent. The dispersing agent can comprise a fatty acid, derivatives of a fatty acid, zinc salts of a fatty acid, a cyclic metal alkoxide, or any combination thereof. Examples of dispersing agents include, but are not limited to, SureMix^{®} S6, STRUKTOL^{®} HT 276, and STRUKTOL^{®} ZB 49. In another aspect, the composition can comprise from 0.5 phr to 4.0 phr, 1.0 phr to 4.0 phr, 0.5 phr to 3.0 phr, or 1.0 phr to 3.0 phr of a vegetable oil. In one aspect, the vegetable oil can have an iodine value of at least 50. In a further aspect, the vegetable oil can have an iodine value of 50 to 150, 100 to 150, 50 to 100, or 125 to 150. In one aspect, the vegetable oil can comprise soybean oil. The iodine value is determined according to ASTM D1510 or equivalent.

The elastomer can comprise repeat units formed by residues of monomers selected from one or more of ethylene, propylene, isobutene, butadiene, isoprene, styrene, acrylonitrile, and any combination thereof. In another aspect, the elastomer can be selected from isoprene-isobutylene-rubber (Butyl rubber, IIR), halogenated isoprene-isobutylene-rubber (HIIR), ethylene-propylene-diene-terpolymer (EPDM), styrene-butadiene copolymer (SBR), acrylonitrile-butadiene copolymer (AB), acrylonitrile-butadiene-styrene copolymer (ABS), polybutadiene, natural rubber, cis-polyisoprene, and any combination thereof. **In** a further aspect, the elastomers generally having a number average molecular weight (Mₙ) between 100,000 Da and 500,000 Da. Molecular weight Mₙ may be determined by methods known in the art, such as by gel permeation chromatography following ASTM D3536 or equivalent.

The compositions disclosed herein can include additional components. **In** one aspect, the compositions can include 0.1 phr to 5.0 phr, 0.1 phr to 4.0 phr, 0.1 phr to 3.0 phr, 0.1 phr to 2.0 phr, or 1.0 phr to 2.0 phr of a tackifying agent. Tackifying agents can include tackifier resins such as phenolic resins. In another aspect, the compositions can include 30 phr to 45 phr or 30 phr to 40 phr of carbon black. **In** one aspect, the compositions can include 0.1 phr to 10.0 phr, 0.1 phr to 8.0 phr, 0.5 phr to 10.0 phr, 0.5 phr to 8.0 phr, or 0.5 phr to 5.0 phr of a vulcanizing or curing agent. The vulcanizing agent can include elemental sulfur, a sulfur-containing silane, or a combination thereof. In another aspect, the compositions can include an accelerator. Accelerators can be preferably but not necessarily used to control the time and/or temperature required for vulcanization/cure and to improve the properties of a vulcanized/cured composition. The composition can include a vulcanizing accelerator in the amount of 0.1 phr to 8.0 phr, 0.5 phr to 6.0 phr, or 0.5 phr to 4.0 phr. In a further aspect, the vulcanizing accelerator can include a dithiocarbamate accelerator, a thiuram accelerator, a diphenylguanidine accelerator, a benzothiazole sulfenamide accelerator, a derivative thereof, or any combination thereof.

The compositions disclosed herein can have an uncured storage shear modulus that is equal to or lesser than the uncured storage shear modulus of an equivalent composition that comprises a mineral oil in place of the vegetable oil. In another aspect, the compositions can have an uncured storage shear modulus that is 1% to 20%, 5% to 20%, or 10% to 20% less than the uncured storage shear modulus of the equivalent composition. In another aspect, the composition can have an uncured storage shear modulus of from 0.130 MPa to 0.170 MPa, 0.140 MPa to 0.170 MPa, or 0.140 MPa to 0.160 MPa. The uncured storage shear modulus can be measured at a strain amplitude of 15%, a temperature of 100 °C, and a frequency of 0.83 Hz. Storage shear modulus of a rubber composition measured before or after cure can be performed using rubber process analyzer RPA2000^{™} from Alpha Technologies in accordance with ASTM D5289-19a.

Also disclosed herein are uncured or vulcanized rubber compositions, where any of the rubber compositions described herein have been vulcanized. In one aspect, the vulcanized rubber compositions can have a storage shear modulus of from 0.70 MPa to 1.00 MPa or 0.75 MPa to 0.95 MPa, where the storage shear modulus is measured at a strain amplitude of 10%, a temperature of 100 °C, and a frequency of 1 Hz. In one aspect, prior to testing, the rubber compositions can be cured at a temperature of 150 °C for 30 minutes. In a further aspect, prior to testing, the rubber compositions can be cured at a temperature of 150 °C, at a strain amplitude of 3.5%, and a frequency of 1.7 Hz for 30 minutes,

In one aspect, the vulcanized rubber compositions can have a hysteresis value that is equal to or less than the hysteresis value of an equivalent composition that comprises a mineral oil in place of the vegetable oil. In another aspect, the vulcanized rubber compositions can have a hysteresis value that is 5% to 15%, 5% to 10%, or 10% to 15% less than the hysteresis value of the equivalent composition. In another aspect, the vulcanized rubber compositions can have a hysteresis value of 0.05 to 0.15, 0.05 to 0.10, or 0.07 to 0.10. Hysteresis can be measured at a strain amplitude of 10%, a temperature of 100 °C, and a frequency of 1 Hz. In one aspect, prior to testing, the rubber compositions can be cured at a temperature of 150 °C for 30. minutes Hysteresis can be quantified as the ratio of the loss modulus (G") to the storage shear modulus (G"/G'), or the tangent delta value.

In one aspect, the vulcanized rubber compositions can have a rebound value that is equal to or greater than the rebound value of an equivalent composition that comprises a mineral oil in place of the vegetable oil. In another aspect, the vulcanized rubber compositions can have a rebound value that is 3% to 15%, 5% to 15%, or 5% to 10% greater than the rebound value of the equivalent composition. In another aspect, the vulcanized rubber compositions can have a rebound value of greater than 59%. In one aspect, the rebound value can be measured at 60 °C. Rebound can be measured at other temperatures as well, such as 23 °C or 100 °C. Rebound can be measured using a rebound resilience tester (e.g., ZwickRoell^{™} 5109 rebound resilience tester) in accordance with the DIN 53512 test method. In one aspect, prior to testing, the rubber compositions can be cured at a temperature of 170 °C for 25 minutes.

In one aspect, the vulcanized rubber compositions can have an elongation at break that is equal to or greater than the elongation at break of an equivalent composition that comprises a mineral oil in place of the vegetable oil. In another aspect, the vulcanized rubber compositions can have an elongation at break that is 3% to 15%, 5% to 15%, 3% to 10%, or 5% to 10% greater than the elongation at break of the equivalent composition. In another aspect, the vulcanized rubber compositions can have an elongation at break of from greater than 625% to 800%. Tensile mechanical properties, such as elongation at break, can be measured using the ASTM D412 test procedure. In one aspect, prior to testing, the rubber compositions can be cured at a temperature of 170 °C for 25 minutes.

### Preparation and applications of rubber compositions

The compositions disclosed herein can be compounded by methods generally known in the rubber compounding art, such as mixing the elastomer, dispersing agent, and vegetable oil together with, optionally, various vulcanizable constituent rubbers and with, optionally, various commonly used additive materials such as: curing or vulcanizing agents, such as sulfur donors; curing aids, such as activators, accelerators, and retarders; processing additives, such as oils, resins (including tackifying resins or agents), and plasticizers; fillers, such as carbon black and silica; pigments; fatty acids; zinc oxide; waxes; antidegradants, such as antioxidants and antiozonants; and peptizing agents. Depending on the intended use of the vulcanizable and vulcanized material (rubbers), the additives mentioned above are selected and commonly used in conventional amounts. In another aspect, processing additives can be included in total amounts of 1 phr to 50 phr. In one aspect, zinc oxide can be included in the rubber compositions in amounts of 1 phr to 5 phr. In another aspect, tackifier resins can be included in amounts of 0.1 phr to 5.0 phr, 0.1 phr to 4.0 phr, 0.1 phr to 3.0 phr, 0.1 phr to 2.0 phr, or 1.0 phr to 2.0 phr. In another aspect, antidegradants can be included in amounts of 1 phr to 10 phr. Representative antioxidants include, but are not limited to, phenylene diamine-based antioxidants (e.g., diphenyl-p-phenylenediamine), dihydroquinolines, and others, such as those disclosed in The Vanderbilt Rubber Handbook (1978), Pages 344 through 346. In one aspect, antiozonants are included in amounts of 1 phr to 15 phr. Representative antiozonants include, but are not limited to, N-phenyl-N'-(1,3-dimethylbutyl)-p-phenylenediamine (6PPD) and N,N'-dixylene-p-phenylenediamine (DTPD). In one aspect, fatty acids are included in amounts of 0.5 phr to 3 phr. Examples of fatty acids include, but are not limited to, stearic acid, palmitic acids, oleic acid, and mixtures thereof. In a further aspect, fatty acids present in the rubber composition can be primarily stearic acid, e.g., the fatty acids can be from 51% to 95% stearic acid by weight. In one aspect, waxes are included in amounts of 1 phr to 5 phr. Microcrystalline waxes, paraffinic waxes, and combinations thereof can be used. In another aspect, curing/vulcanizing agents can be included in amounts of 0.1 phr to 10.0 phr, 0.1 phr to 8.0 phr, 0.5 phr to 10.0 phr, 0.5 phr to 8.0 phr, or 0.5 phr to 5.0 phr. In another aspect, curing aids, including activators, accelerators, and retarders, can be included in amounts of 0.1 phr to 8.0 phr, 0.5 phr to 6.0 phr, or 0.5 phr to 4.0 phr. In a further aspect, the vulcanizing accelerator can include a dithiocarbamate accelerator, a thiuram accelerator, a diphenylguanidine accelerator, a benzothiazole sulfenamide accelerator, a derivative thereof, or any combination thereof.

The compositions disclosed herein can be mixed by methods known in the rubber mixing art. For example, the ingredients can be mixed in at least two stages, namely, at least one nonproductive stage followed by a productive mix stage. In one aspect, the mixing of the compositions comprises only a single nonproductive stage. The final curatives including curing or vulcanizing agents may be typically mixed in the final stage, conventionally called the productive mix stage. In the productive mix stage, mixing typically occurs at a temperature, or ultimate temperature, lower than the mix temperature(s) of any preceding nonproductive mix stage(s). In one aspect, the rubber composition may be subjected to a thermomechanical mixing step. The mixing stages can comprise thermomechanical mixing, generally characterized by mechanical working in a mixer (e.g., internal batch mixer) or extruder for a period of time at an elevated temperature suitable to produce a rubber. The appropriate duration of the thermomechanical mixing varies as a function of the operating conditions and the volume and nature of the components. For example, the thermomechanical mixing may be from 0.5 to 10 minutes.

More specifically, in one aspect, the method for mixing rubber can comprise a nonproductive stage and a productive stage. The nonproductive stage can include combining together an elastomer, 1.0 phr to 4.0 phr of a dispersing agent, and 0.5 phr to 4.0 phr of a vegetable oil, thereby forming an initial mixture; and mixing the initial mixture at a temperature of 120 °C to 175 °C, thereby forming a nonproductive mixture. The productive stage can include combining together the nonproductive mixture with a curing agent, optionally 0.1 phr to 8 phr of a curing agent, thereby forming an intermediate mixture; and mixing the intermediate mixture at a temperature of 95 °C to 115 °C, thereby forming a productive mixture. **In** another aspect, the method for mixing rubber consists of a single nonproductive stage and a single productive stage. The initial mixture can be mixed for 1 minute to 6 minutes or 1 minute to 4 minutes. The intermediate mixture can be mixed for 1 minute to 5 minutes or 2 minutes to 3 minutes.

This invention also provides for articles that incorporate any of the vulcanized rubber compositions disclosed herein. In one aspect, the article comprises a tire, such as a pneumatic tire, or a component of a tire. The tire can be a race tire, passenger tire, aircraft tire, agricultural tire, off-the-road tire, truck or bus tire, and the like. The tire can also be a radial or bias. The component of the tire can be a tread, base, sidewall, apex, chafer, sidewall insert, wirecoat, innerliner, or any combination thereof. In another aspect, the component of the tire including the composition can be a tread, base, sidewall, apex, wirecoat, ply coat, shoulder wedge, or any combination thereof. Vulcanization of the disclosed tires is generally carried out at conventional temperatures ranging from 100 °C to 200 °C or from 110 °C to 180 °C. Such tires can be built, shaped, molded and cured by various methods which are known and will be readily apparent to those having skill in such art.

### Aspects

The following listing of exemplary aspects supports and is supported by the invention provided herein.

Aspect 1. A composition, comprising an elastomer; 1.0 phr to 4.0 phr of a dispersing agent; and 0.5 phr to 4.0 phr of a vegetable oil.

Aspect 2. The composition of aspect 1, wherein the composition does not comprise a mineral oil.

Aspect 3. The composition of aspect 1 or aspect 2, further comprising from 0.1 phr to 2.0 phr of a tackifying agent.

Aspect 4. The composition of any one of aspects 1-3, further comprising from 30 phr to 45 phr of carbon black.

Aspect 5. The composition of any one of aspects 1-4, wherein the elastomer comprises repeat units formed from residues of monomers selected from one or more of ethylene, propylene, isobutene, butadiene, isoprene, styrene, acrylonitrile, and any combination thereof.

Aspect 6. The composition of any one of aspects 1-5, wherein the elastomer comprises isoprene-isobutylene-rubber, halogenated isoprene-isobutylene-rubber, ethylene-propylene-diene-terpolymer, styrene-butadiene rubber, acrylonitrile-butadiene rubber, acrylonitrile-butadiene-styrene copolymer, polybutadiene, natural rubber, cis polyisoprene, or any combination thereof.

Aspect 7. The composition of any one of aspects 1-5, wherein the elastomer comprises natural rubber and polybutadiene rubber.

Aspect 8. The composition of any one of aspects 1-7, wherein the dispersing agent comprises a fatty acid, derivatives of a fatty acid, zinc salts of a fatty acid, a cyclic metal alkoxide, or any combination thereof.

Aspect 9. The composition of any one of aspects 1-8, wherein the composition comprises from 2.0 phr to 3.0 phr of the dispersing agent.

Aspect 10. The composition of any one of aspects 1-9, wherein the vegetable oil has an iodine value of at least 50.

Aspect 11. The composition of any one of aspects 1-10, wherein the vegetable oil has an iodine value of 50 to 150.

Aspect 12. The composition of any one of aspects 1-11, wherein the vegetable oil comprises soybean oil.

Aspect 13. The composition of any one of aspects 1-12, wherein the composition comprises from 0.5 phr to 4.0 phr of the vegetable oil.

Aspect 14. The composition of any one of aspects 1-13, wherein the composition has an uncured storage shear modulus that is equal to or lesser than the uncured storage shear modulus of an equivalent composition that comprises a mineral oil in place of the vegetable oil; and wherein the uncured storage shear modulus is measured at a strain amplitude of 15%, a temperature of 100 °C, and a frequency of 0.83 Hz.

Aspect 15. The composition of aspect 14, wherein the composition has an uncured storage shear modulus that is 1% to 20% less than the uncured storage shear modulus of the equivalent composition.

Aspect 16. The composition of any one of aspects 1-17, wherein the composition has an uncured storage shear modulus of from 0.140 MPa to 0.160 MPa; and wherein the uncured storage shear modulus is measured at a strain amplitude of 15%, a temperature of 100 °C, and a frequency of 0.83 Hz.

Aspect 17. A vulcanized rubber composition, comprising the composition of any one of aspects 1-16 that has been vulcanized.

Aspect 18. The vulcanized rubber composition of aspect 17, wherein the vulcanized rubber composition has a storage shear modulus of from 0.75 MPa to 0.95 MPa, wherein the storage shear modulus is measured at a strain amplitude of 10%, a temperature of 100 °C, and a frequency of 1 Hz.

Aspect 19. The vulcanized rubber composition of aspect 17 or aspect 18, wherein the vulcanized rubber composition has a hysteresis value that is equal to or less than the hysteresis value of an equivalent composition that comprises a mineral oil in place of the vegetable oil; and wherein the hysteresis is measured at a strain amplitude of 10%, a temperature of 100 °C, and frequency of 1 Hz.

Aspect 20. The vulcanized rubber composition of aspect 19, wherein the vulcanized rubber composition has a hysteresis value that is 5% to 15% less than the hysteresis value of the equivalent composition.

Aspect 21. The vulcanized rubber composition of any one of aspects 17-20, wherein the vulcanized rubber composition has a hysteresis value of from 0.07 to 0.10; and wherein the hysteresis is measured at a strain amplitude of 10%, a temperature of 100 °C, and a frequency of 1 Hz.

Aspect 22. The vulcanized rubber composition of any one of aspects 17-21, wherein the vulcanized rubber composition has a rebound that is equal to or greater than the rebound of an equivalent composition that comprises a mineral oil in place of the vegetable oil; and wherein the rebound is measured at 60 °C.

Aspect 23. The vulcanized rubber composition of aspect 22, wherein the vulcanized rubber composition has a rebound that is 5% to 10% greater than the rebound of the equivalent composition.

Aspect 24. The vulcanized rubber composition of any one of aspects 17-23, wherein the vulcanized rubber composition has a rebound of greater than 59%; and wherein the rebound is measured at 60 °C.

Aspect 25. The vulcanized rubber composition of any one of aspects 17-24, wherein the vulcanized rubber composition has an elongation at break that is equal to or greater than the elongation at break of an equivalent composition that comprises a mineral oil in place of the vegetable oil.

Aspect 26. The vulcanized rubber composition of aspect 25, wherein the vulcanized rubber composition has an elongation at break that is 3% to 10% greater than the elongation at break of the equivalent composition.

Aspect 27. The vulcanized rubber composition of any one of aspects 17-26, wherein the vulcanized rubber composition has an elongation at break of greater than 625%.

Aspect 28. The vulcanized rubber composition of aspect 27, wherein the vulcanized rubber composition has an elongation at break of from greater than 625% to 800%.

Aspect 29. An article comprising the vulcanized rubber composition of any one of aspects 17-28.

Aspect 30. The article of aspect 29, wherein the article comprises a tire or a component of a tire.

Aspect 31. The article of aspect 30, wherein the component of the tire comprises a tread, base, sidewall, apex, wirecoat, ply coat, shoulder wedge, or any combination thereof.

Aspect 32. A method for mixing rubber, comprising a nonproductive stage and a productive stage, wherein the nonproductive stage comprises combining together an elastomer, 1.0 phr to 4.0 phr of a dispersing agent; and 0.5 phr to 4.0 phr of a vegetable oil, thereby forming an initial mixture; and mixing the initial mixture at a temperature of 120 °C to 175 °C, thereby forming a nonproductive mixture; and the productive stage comprises combining together the nonproductive mixture with a curing agent, thereby forming an intermediate mixture; and mixing the intermediate mixture at a temperature of 95 °C to 115 °C, thereby forming a productive mixture.

Aspect 33. The method of aspect 32, wherein the nonproductive mixture is combined together with 0.1 phr to 8 phr of the curing agent.

Aspect 34. The method of any one of aspects 32-33, wherein the nonproductive stage further comprises combining together at least one of carbon black or a tackifying agent, to form the initial mixture.

Aspect 35. The method of any one of aspects 32-34, wherein the nonproductive stage further comprises combining together at least one of carbon black, a tackifying agent, a fatty acid, zinc oxide, a wax, or an antidegradant to form the initial mixture.

### Examples

The following examples are put forth so as to provide those of ordinary skill in the art with a complete invention and description of how the compounds, compositions, articles, devices and/or methods claimed herein are made and evaluated and are intended to be purely exemplary of the invention and are not intended to limit the scope of what the inventors regard as their invention. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric.

### Evaluation of Rubber Compositions

Seven rubber compositions comprising a polybutadiene rubber and natural rubber-based matrix are provided in Table 1. Notable differences between the compositions include the type of oil used and the presence of dispersing agents and tackifying agents. Additionally, the compositions vary in the number of mixing stages, being either a two-pass mix or a three-pass mix. Reducing the number of mixing passes required to process a rubber composition can reduce cost associated with producing a tire from the rubber composition. However, as seen between Control B and Control C in Table 2, merely reducing the number of mixing passes can result in undesirable changes in rheological properties, such as increased viscosity.

Experimental compositions A, B, and C were prepared using only two mix passes. Generally, when compared to the Control compositions C and D (also prepared using only two mix passes), Experimental compositions A, B, and C have similar to lower viscosity (measured as the uncured storage shear modulus G' at 15% strain); similar to lower cured stiffness (measured as the storage shear modulus G' at 10% strain); similar to higher hysteresis (measured as Tangent Delta at 10% strain); higher rebound; and similar to increased elongation at break. The uncured Experimental rubber compositions have better processability compared to uncured Control compositions C and D. The cured Experimental rubber compositions generally have similar to better rolling resistance compared to cured Control compositions C and D. Higher rebound and lower hysteresis contribute to improved rolling resistance.

**Table 1: Rubber Compositions**

| | Control | | | | Experimental | | |
|---|---|---|---|---|---|---|---|
| Ingredient | A | B | C | D | A | B | C |
| Polybutadiene Rubber¹ | 40 | 40 | 40 | 40 | 40 | 40 | 40 |
| Natural Rubber² | 60 | 60 | 60 | 60 | 60 | 60 | 60 |
| Carbon Black | 37 | 37 | 37 | 37 | 37 | 37 | 37 |
| Dispersing agent³ | -- | -- | -- | 2.5 | 2.5 | 2.5 | 2.5 |
| Oil⁴ | 1 | 2.5 | 2.5 | 1 | -- | -- | -- |
| Tackifying agent | 2 | 0.5 | 0.5 | 2 | 2 | 1 | -- |
| Vegetable Oil⁵ | -- | -- | -- | -- | 1 | 2 | 2 |
| Wax | 1.5 | 1.5 | 1.5 | 1.5 | 1.5 | 1.5 | 1.5 |
| Antidegradants | 8.5 | 8.5 | 8.5 | 8.5 | 8.5 | 8.5 | 8.5 |
| Fatty Acid | 1.5 | 1.5 | 1.5 | 1.5 | 1.5 | 1.5 | 1.5 |
| Zinc oxide | 3 | 3 | 3 | 3 | 3 | 3 | 3 |
| Curative and Accelerator⁶ | 2.1 | 2.1 | 2.1 | 2.1 | 2.1 | 2.1 | 2.1 |
| | | | | | | | |
| Total phr | 156.6 | 156.6 | 156.6 | 159.1 | 159.1 | 159.1 | 158.1 |
| Number of Mixing Stages/Passes | 3 | 3 | 2 | 2 | 2 | 2 | 2 |

| | | | | | | | |
|---|---|---|---|---|---|---|---|
| ¹ polybutadiene nickel and cobalt catalyst grades, including neodymium Budene 1222 from Goodyear Chemical ² natural cis-1,4-polyisoprene ³ Suremix^{®} S6, from Flow Polymers ⁴ rubber processing oil, including Napthenic oil ⁵ soybean oil as technical grade soybean oil from Cargill ⁶ sulfur curative and sulfenamide-type accelerator | | | | | | | |

**Table 2: Rheological Properties**

| | Control | | | | Experimental | | |
|---|---|---|---|---|---|---|---|
| Property | A | B | C | D | A | B | C |
| Uncured Modulus G' (MPa) at 0.83 Hz, 15% strain¹ | 0.140 | 0.130 | 0.162 | 0.150 | 0.150 | 0.140 | 0.150 |
| Modulus G' (MPa) at 1 Hz, 10% strain² | 0.800 | 0.871 | 0.898 | 0.790 | 0.790 | 0.790 | 0.820 |
| Tangent Delta at 10% strain | 0.090 | 0.080 | 0.080 | 0.090 | 0.090 | 0.090 | 0.080 |
| Rebound (%) at 60°C³ | 60 | 60 | 60 | 60 | 61 | 62 | 63 |
| Elongation at Break (%)⁴ | 652 | 676 | 667 | 664 | 661 | 678 | 691 |

| | | | | | | | |
|---|---|---|---|---|---|---|---|
| ^{1, 2} measured at 100 °C using rubber process analyzer RPA2000^{™} from Alpha Technologies in accordance with ASTM D5289-19a ³ measured on a ZwickRoell^{™} 5109 rebound resilience tester according to DIN 53512 ⁴ measured in accordance with ASTM D412, Method B | | | | | | | |

Viscosity and stiffness of a rubber composition can be characterized using the uncured storage shear modulus value and the cured storage shear modulus value, respectively, of the composition. A larger cured storage shear modulus value indicates a stiffer compound. Storage shear modulus (G') of a rubber composition measured before and after cure was performed using the rubber process analyzer RPA2000^{™} from Alpha Technologies in accordance with ASTM D5289-19a. Prior to measuring the stiffness of a cured rubber composition, the composition was cured at 150 °C for 30 minutes.

Tangent delta is the ratio of the loss modulus (G") to the storage shear modulus (G"/G'). A higher tangent delta indicates more energy loss per stiffness of a compound. Tangent delta provides a means of measuring hysteresis, or the amount of energy lost per cycle during deformation of an elastomer. Since hysteresis accounts for the majority of rolling resistance, an elastomer or composition with a higher tangent delta can indicate a higher rolling resistance for a tire comprising said elastomer or composition.

Measuring rebound using a ZwickRoell^{™} 5109 rebound resilience tester can provide a means of determining the resilience of rubber within a range of impact strains and strain rate, by means of the impacting and measuring apparatus on forming the requirements described in the test method following DIN 53512. Prior to testing, the rubber composition was cured at 170 °C for 25 minutes. The test was conducted at a sample temperature of 60 °C. Resilience is recorded as pendulum rebound height after the pendulum hits a rubber sample. The higher the rebound value, the less energy is lost due to the pendulum's impact on the rubber sample. Higher rebound value can be associated with a lower tire rolling resistance.

Tensile mechanical properties of a cured rubber composition, such as tensile stress, modulus at various strains, and elongation at break, can be measured using the ASTM D412, Method B test procedure. Briefly, a ring-shaped rubber sample of known dimensions was placed in an extensometer and then clamped in grips of a force displacement machine. Prior to testing, the rubber composition was cured at 170 °C for 25 minutes. The test is conducted at a sample temperature of 23 °C. The rubber sample is pulled at a set rate of 500 mm/min until it breaks.

## Claims

1. A composition comprising an elastomer; 1.0 phr to 4.0 phr of a dispersing agent; and 0.5 phr to 4.0 phr of a vegetable oil.

2. The composition of claim 1, wherein the composition does not comprise a mineral oil.

3. The composition of claim 1 or 2, further comprising from 0.1 phr to 2.0 phr of a tackifying agent and/or further comprising from 30 phr to 45 phr of carbon black.

4. The composition of at least one of the previous claims, wherein the elastomer comprises repeat units formed from residues of monomers selected from one or more of ethylene, propylene, isobutene, butadiene, isoprene, styrene, acrylonitrile, and any combination thereof.

5. The composition of at least one of the previous claims, wherein the elastomer comprises isoprene-isobutylene-rubber, halogenated isoprene-isobutylene-rubber, ethylene-propylene-diene-terpolymer, styrene-butadiene rubber, acrylonitrile-butadiene rubber, acrylonitrile-butadiene-styrene copolymer, polybutadiene, natural rubber, cis polyisoprene, or any combination thereof.

6. The composition of at least one of the previous claims, wherein the dispersing agent comprises a fatty acid, derivatives of a fatty acid, a zinc salt of a fatty acid, a cyclic metal alkoxide, or any combination thereof.

7. The composition of at least one of the previous claims, wherein the vegetable oil has an iodine value of 50 to 150; and/or wherein the vegetable oil is or comprises soybean oil.

8. The composition of at least one of the previous claims, wherein the composition has an uncured storage shear modulus that is 5% to 20% less than the uncured storage shear modulus of an equivalent composition that comprises a mineral oil in place of the vegetable oil, wherein the uncured storage shear modulus is measured at a strain amplitude of 15% at a temperature of 100 °C and a frequency of 0.83 Hz.

9. A vulcanized rubber composition, comprising the composition of at least one of the previous claims that has been vulcanized.

10. The vulcanized rubber composition of claim 9, wherein the vulcanized rubber composition has a hysteresis value that 5% to 15% less than the hysteresis value of an equivalent composition that comprises a mineral oil in place of the vegetable oil, wherein the hysteresis is measured at a strain amplitude of 10%, a temperature of 100 °C, and frequency of 1 Hz.

11. The vulcanized rubber composition of claim 9 or 10, wherein the vulcanized rubber composition has a rebound that is 5% to 10% greater than the rebound of an equivalent composition that comprises a mineral oil in place of the vegetable oil, wherein the rebound is measured at 60 °C; and/or wherein the vulcanized rubber composition has an elongation at break that is 3% to 10% greater than the elongation at break of an equivalent composition that comprises a mineral oil in place of the vegetable oil.

12. An article, a tire or a tire component comprising the vulcanized rubber composition of at least one of the previous claims 9 to 11, the tire component preferably being a tread, a tread base, a tread cap, a sidewall, an apex, a wirecoat, a ply coat, a shoulder wedge, or any combination thereof.

13. A method for mixing rubber, comprising a nonproductive stage and a productive stage, wherein the nonproductive stage comprises:
combining together an elastomer, 1.0 phr to 4.0 phr of a dispersing agent; and 0.5 phr to 4.0 phr of a vegetable oil, thereby forming an initial mixture; and
mixing the initial mixture at a temperature of 120 °C to 175 °C, thereby forming a nonproductive mixture; and
wherein the productive stage comprises:
combining together the nonproductive mixture with a curing agent, thereby forming an intermediate mixture; and
mixing the intermediate mixture at a temperature of 95 °C to 115 °C, thereby forming a productive mixture.

14. The method of claim 13, wherein the nonproductive stage further comprises combining together at least one of carbon black, a tackifying agent, a fatty acid, zinc oxide, a wax, or an antidegradant to form the initial mixture.

15. The method of claim 13 or 14, wherein the productive stage further comprises combining together at least one of an accelerator or a retarder to form the intermediate mixture.
